(19) Europäisches Patentamt
European Patent Office
Office européen des brevets

(11) **EP 3 184 908 B1**

(12) **FASCICULE DE BREVET EUROPEEN**

(45) Date de publication et mention
de la délivrance du brevet:
**20.06.2018 Bulletin 2018/25**

(51) Int Cl.:
***F24C 7/08*** *(2006.01)*   ***F24H 9/20*** *(2006.01)*
***G05D 23/19*** *(2006.01)*   ***G05D 23/27*** *(2006.01)*

(21) Numéro de dépôt: **16205135.3**

(22) Date de dépôt: **19.12.2016**

(54) **PROCEDE DE REGULATION D'UN APPAREIL DE CHAUFFAGE EN FONCTION DE SA DISTANCE A UN OBSTACLE, ET APPAREIL DE CHAUFFAGE ASSOCIE**

VERFAHREN ZUR REGULIERUNG EINES HEIZGERÄTS JE NACH ABSTAND ZU EINEM HINDERNIS, UND ENTSPRECHENDES HEIZGERÄT

METHOD FOR REGULATING A HEATING DEVICE IN ACCORDANCE WITH THE DISTANCE FROM SAME TO AN OBSTACLE, AND ASSOCIATED HEATING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2015 FR 1563000**

(43) Date de publication de la demande:
**28.06.2017 Bulletin 2017/26**

(73) Titulaire: **Atlantic Industrie**
**85000 La Roche sur Yon (FR)**

(72) Inventeur: **LE BOHEC, Mickaël**
**85000 La Roche-sur-Yon (FR)**

(74) Mandataire: **Cabinet Chaillot**
**16/20, avenue de l'Agent Sarre**
**B.P. 74**
**92703 Colombes Cedex (FR)**

(56) Documents cités:
**EP-A1- 2 104 016        DE-A1- 4 135 086**
**GB-A- 2 051 421         US-A- 5 798 503**
**US-A1- 2014 355 968**

**EP 3 184 908 B1**

**Description**

La présente invention concerne le domaine de la régulation des appareils de chauffage, notamment mais non exclusivement les appareils de chauffage à rayonnement thermique et convectifs, et porte en particulier sur un procédé de régulation d'un appareil de chauffage en fonction de sa distance à un obstacle dans le but d'améliorer le confort de l'occupant et de rendre minimaux les risques pour sa sécurité, et sur un appareil de chauffage associé.

La régulation de puissance émise par rayonnement par un appareil de chauffage à rayonnement thermique dit « radiatif » est déjà bien connue de l'homme du métier, comme le montre la demande de brevet européen EP0264355A1 dans laquelle le capteur permettant la régulation du rayonnement n'est pas directement un capteur de rayonnement mais un capteur de température ressentie qui permet de manière indirecte la mesure du rayonnement, la régulation de l'appareil de chauffage étant ensuite basée sur la différence entre la température ressentie mesurée et la température ressentie de consigne, ledit capteur n'étant pas inclus dans l'appareil de chauffage et posant donc la question de son emplacement hors de l'appareil de chauffage. Cependant, cet appareil de chauffage ne permet pas de mesurer la distance de l'occupant à l'appareil de chauffage et donc ne permet pas de réguler la puissance émise par rayonnement en fonction de la distance mesurée afin d'améliorer le confort de l'occupant pour qu'il reçoive une puissance rayonnée constante quelle que soit sa distance à l'appareil de chauffage. De plus, ce procédé de régulation ne permet pas de couper l'alimentation de l'appareil de chauffage lorsque l'occupant ou un objet est trop près de celui-ci afin de rendre minimaux les risques pour sa sécurité.

Certains appareils de chauffage radiatifs sont néanmoins équipés de détecteurs d'absence/présence mais ces détecteurs d'absence/présence ne sont pas configurés pour mesurer la distance à laquelle se trouvent les éléments qu'ils détectent, et sont donc incapables de différencier le cas d'une présence lointaine nécessitant une chauffe pour amener l'occupant en situation de confort du cas d'une présence proche nécessitant une coupure de l'appareil de chauffage pour des raisons de sécurité. Ainsi, dans le cas à titre d'exemple d'un meuble placé devant un appareil de chauffage radiatif, le détecteur d'absence/présence de l'appareil de chauffage détecte la présence du meuble en continu, mais est incapable d'adapter sa chauffe, ce qui peut conduire à détériorer par brûlure le côté du meuble le plus proche de l'appareil de chauffage radiatif.

La demande de brevet européen EP0785493A1 divulgue un procédé pour l'obtention d'une température de confort personnel dans un local et un dispositif pour la mise en oeuvre dudit procédé, le procédé consistant à mesurer la température aux alentours d'un dispositif radiatif en évitant l'influence thermique directe du dispositif radiatif, à déterminer la distance entre une personne et le dispositif radiatif et à fournir au dispositif radiatif une puissance de rayonnement nécessaire pour la personne en fonction de la température mesurée et de la distance mesurée. Cependant, ce dispositif radiatif est utilisé en complément d'un radiateur et uniquement pour atteindre rapidement la température de confort, l'apport de chaleur à apporter par le dispositif radiatif étant calculé, en évitant l'influence directe du dispositif radiatif, en fonction des conditions résultant uniquement des températures des murs et du radiateur, le radiateur étant susceptible d'assurer le confort thermique de la personne mais uniquement après une période de temps d'au moins dix minutes en raison de sa faible réactivité. Ce procédé ne permet donc pas la mesure directe de la puissance émise par rayonnement par le dispositif radiatif afin de pouvoir assurer rapidement le confort thermique d'un occupant avec uniquement le dispositif radiatif. De plus, ce procédé ne permet pas de couper le dispositif radiatif lorsque l'occupant ou un objet est trop près de celui-ci afin de rendre minimaux les risques pour la sécurité de l'occupant. En outre, ce procédé ne permet pas de distinguer un objet fixe d'un utilisateur, ce qui rend la régulation inefficace lorsqu'un objet fixe est disposé entre le dispositif radiatif et l'utilisateur. Les documents EP 2104016 A1 et US 5798503 sont également pertinents par rapport à la présente invention.

La présente invention vise à résoudre les inconvénients de l'état antérieur de la technique, en proposant un procédé de régulation d'un appareil de chauffage en fonction de sa distance à un obstacle, tel qu'un utilisateur ou un objet fixe, ledit procédé permettant de passer l'appareil de chauffage dans un mode de fonctionnement de sécurité si la distance mesurée de l'obstacle le plus proche de l'appareil de chauffage est inférieure ou égale à un seuil de sécurité, et permettant de mettre à jour la consigne de puissance à émettre en fonction de la distance mesurée de l'obstacle le plus proche ou le cas échéant de l'utilisateur le plus proche si la distance mesurée de l'obstacle le plus proche est supérieure audit seuil de sécurité, ce qui permet ainsi d'améliorer le confort de l'occupant et de rendre minimaux les risques pour la sécurité de l'occupant. De plus, ce procédé permet la mesure de la puissance émise par rayonnement par l'appareil de chauffage à rayonnement thermique afin de pouvoir assurer rapidement le confort thermique d'un occupant avec un dispositif de chauffage unique.

La présente invention propose également un appareil de chauffage comprenant un moyen de capteur de distance et un module de régulation configurés pour mettre en oeuvre le procédé selon la présente invention.

La présente invention a donc pour objet un procédé de régulation d'un appareil de chauffage en fonction de sa distance à un obstacle, l'appareil de chauffage comprenant un moyen de chauffage et un module de régulation relié à un moyen de capteur de puissance rayonnée par le moyen de chauffage et à un moyen de capteur de distance, le module de régulation étant configuré pour comparer la puissance rayonnée mesurée par le moyen de capteur de

2

puissance rayonnée à une instruction de puissance à émettre puis envoyer une consigne de puissance à émettre au moyen de chauffage de l'appareil de chauffage selon le résultat de comparaison, caractérisé par le fait que le procédé comprend :

- la détection, par le moyen de capteur de distance, de tous les obstacles présents dans le champ de détection du moyen de capteur de distance ;
- la mesure, par le moyen de capteur de distance, de la distance de l'obstacle le plus proche de l'appareil de chauffage ;
- la comparaison de la distance mesurée de l'obstacle le plus proche à un seuil de sécurité prédéfini, puis :
- si la distance mesurée de l'obstacle le plus proche est inférieure ou égale audit seuil de sécurité, la mise à jour par le module de régulation de la consigne de puissance à émettre à une consigne de puissance à émettre de sécurité prédéfinie, et
- si la distance mesurée de l'obstacle le plus proche est supérieure audit seuil de sécurité :

  - la détermination du point de savoir si au moins l'un des obstacles détectés est un utilisateur ;
  - si aucun des obstacles détectés n'est un utilisateur, le maintien par le module de régulation de la consigne de puissance à émettre ;
  - si au moins l'un des obstacles détectés est un utilisateur, la mesure, par le moyen de capteur de distance, de la distance de l'utilisateur le plus proche de l'appareil de chauffage ; et
  - la mesure de la puissance rayonnée par le moyen de capteur de puissance rayonnée et la mise à jour par le module de régulation de la consigne de puissance à émettre en fonction de la puissance rayonnée et de la distance mesurée de l'utilisateur le plus proche, selon une première loi de conversion, de telle sorte que l'utilisateur le plus proche de l'appareil de chauffage reçoit par rayonnement une puissance constante correspondant à l'instruction de puissance à émettre quelle que soit sa distance à l'appareil de chauffage.

Ainsi, le procédé de régulation de l'appareil de chauffage en fonction de sa distance à un obstacle permet d'améliorer le confort de l'occupant et de rendre minimaux les risques pour sa sécurité.

Chaque obstacle est par exemple un objet fixe ou un utilisateur en mouvement ou non-en mouvement.

Le moyen de chauffage peut être un moyen de chauffage radiatif ou convectif, par exemple un corps de chauffe ou une façade chauffante, sans que cette énumération soit limitative.

On désigne par l'expression « champ de détection » du capteur l'espace dans lequel le capteur est apte à détecter un événement.

Ce procédé de régulation est de préférence réalisé en temps réel, mais pourrait également être réalisé périodiquement sans s'écarter du cadre de la présente invention.

Ce procédé de régulation permet d'offrir à l'occupant des conditions de vie confortables d'un point de vue thermique, le mode de transfert de la chaleur par rayonnement présentant plusieurs avantages :

- du point de vue de la consommation d'énergie puisque contrairement aux autres modes de transfert, une puissance radiative ne nécessite pas d'intermédiaires entre l'appareil de chauffage et l'occupant pour se propager, il n'est donc pas nécessaire de chauffer l'ensemble de l'air de la pièce ; et
- du point de vue de la régulation puisqu'il s'agit du mode de transfert le plus réactif, donc le plus à même de permettre une régulation rapide et précise.

L'appareil de chauffage peut ainsi passer dans un mode de fonctionnement de sécurité si la distance mesurée de l'obstacle le plus proche est inférieure ou égale au seuil de sécurité, ladite distance mesurée pouvant par exemple être la distance d'un utilisateur en face de l'appareil de chauffage ou bien celle d'un objet tel qu'un meuble ou un rideau, ce qui permet d'éviter les risques de brûlure de l'utilisateur ou de carbonisation de l'objet.

Hormis cet aspect sécurité, la mesure de la distance permet également de réguler la puissance émise par l'appareil de chauffage. En effet, à puissance radiative émise égale, la puissance reçue par rayonnement par l'occupant est différente selon la distance à laquelle il se trouve par rapport à l'appareil de chauffage. Le fait de diminuer la puissance émise lorsque l'occupant s'approche de l'appareil de chauffage ou au contraire de l'augmenter s'il s'en éloigne participe à offrir à l'occupant les meilleures conditions thermiques possibles dans la pièce où est installé l'appareil de chauffage.

L'appareil de chauffage peut ainsi mettre à jour la consigne de puissance à émettre en fonction de la distance mesurée si la distance mesurée est supérieure au seuil de sécurité, ce qui permet ainsi d'améliorer le confort de l'occupant qui reçoit alors par rayonnement une puissance constante quelle que soit sa distance à l'appareil de chauffage.

De plus, ce procédé permet la mesure directe de la puissance émise par rayonnement par l'appareil de chauffage à rayonnement thermique afin de pouvoir assurer rapidement le confort thermique de l'occupant avec un dispositif de chauffage unique.

L'instruction de puissance à émettre correspond à la puissance que souhaite ressentir l'utilisateur, quelle que soit sa distance à l'appareil de chauffage, la consigne de puissance à émettre étant l'ordre qu'envoie le module de régulation à l'appareil de chauffage, en fonction de la distance mesurée et de la puissance rayonnée mesurée, pour que l'utilisateur perçoive comme puissance une puissance correspondant à l'instruction de puissance à émettre.

Lorsqu'un objet fixe est placé entre le dispositif de chauffage et l'utilisateur, la mesure de la distance de l'utilisateur le plus proche de l'appareil de chauffage permet de prendre en compte, pour la régulation de l'appareil de chauffage, la distance de l'utilisateur le plus proche et non celle de l'objet fixe, afin de réaliser une régulation efficace de l'appareil de chauffage et d'assurer un confort optimal à l'utilisateur, tout en évitant tout risque de carbonisation de l'objet placé entre l'appareil de chauffage et l'utilisateur : la puissance émise sera au maximum la puissance au-dessus de laquelle il y a un risque de carbonisation de l'objet placé entre l'appareil de chauffage et l'utilisateur.

La présente invention a également pour objet un procédé de régulation d'un appareil de chauffage à rayonnement thermique en fonction de sa distance à un obstacle, l'appareil de chauffage comprenant un moyen de chauffage à rayonnement thermique et un module de régulation relié à un moyen de capteur de puissance rayonnée par le moyen de chauffage et à un moyen de capteur de distance, le module de régulation étant configuré pour comparer la puissance rayonnée mesurée par le moyen de capteur de puissance rayonnée à une instruction de puissance à émettre puis envoyer une consigne de puissance à émettre au moyen de chauffage de l'appareil de chauffage selon le résultat de comparaison, caractérisé par le fait que le procédé comprend :

- la mesure, par le moyen de capteur de distance, de la distance de l'obstacle le plus proche de l'appareil de chauffage ;
- la comparaison de la distance mesurée de l'obstacle le plus proche à un seuil de sécurité prédéfini ; puis
- si la distance mesurée de l'obstacle le plus proche est inférieure ou égale audit seuil de sécurité, la mise à jour par le module de régulation de la consigne de puissance à émettre à une consigne de puissance à émettre de sécurité prédéfinie.

Ainsi, l'appareil de chauffage peut passer dans un mode de fonctionnement de sécurité si la distance mesurée de l'obstacle le plus proche de l'appareil de chauffage est inférieure ou égale au seuil de sécurité, ladite distance mesurée pouvant par exemple être la distance d'un utilisateur en face de l'appareil de chauffage ou bien celle d'un objet tel qu'un meuble ou un rideau, ce qui permet d'éviter les risques de brûlure de l'utilisateur et de carbonisation de l'objet.

Selon une caractéristique particulière de l'invention, la détermination du point de savoir si au moins l'un des obstacles détectés est un utilisateur, et si tel est le cas, la mesure, par le moyen de capteur de distance, de la distance de l'utilisateur le plus proche de l'appareil de chauffage comprennent :

- le balayage vertical, par le moyen de capteur de distance, de la pièce dans laquelle l'appareil de chauffage est installé afin de réaliser des mesures de distance à position angulaire constante ;
- la suppression des mesures de distance correspondant au sol et au plafond de la pièce dans laquelle l'appareil de chauffage est installé ;
- la comparaison de chaque mesure de distance, parmi les mesures de distance restantes, à au moins une mesure de distance correspondante antérieure à la même position angulaire afin de déterminer les mesures de distance correspondant à au moins un utilisateur en mouvement ; et
- la détermination de la distance de l'utilisateur le plus proche de l'appareil de chauffage selon les mesures de distance correspondant à au moins un utilisateur en mouvement déterminées.

Ainsi, ces étapes permettent le bon fonctionnement de la régulation en cas de présence d'un objet fixe entre l'appareil de chauffage et l'utilisateur, la comparaison de chaque mesure de distance à une ou plusieurs mesures de distance correspondantes antérieures permettant de sélectionner les mesures de distance pertinentes pour la régulation, en éliminant les distances qui ne varient pas dans le temps, telles que celles du sol, du plafond et des objets fixes.

Selon une caractéristique particulière de l'invention, le moyen de capteur de puissance rayonnée est une sonde de température disposée sur le moyen de chauffage de l'appareil de chauffage, la mesure de la puissance rayonnée consistant à mesurer la température du moyen de chauffage au niveau de l'emplacement de la sonde de température, puis à calculer la température moyenne du moyen de chauffage selon une seconde loi de conversion.

D'un point de vue pratique, piloter la puissance rayonnée d'un appareil de chauffage radiatif revient à piloter la température moyenne de son moyen de chauffage.

La sonde de température étant disposée à un emplacement donné sur le moyen de chauffage, la température moyenne du moyen de chauffage doit être calculée en fonction de la température mesurée par la sonde de température selon la seconde loi de conversion qui dépend, entre autres, du matériau et des dimensions du moyen de chauffage.

Ainsi, la puissance rayonnée par le moyen de chauffage peut être déterminée par calcul de la température moyenne du moyen de chauffage selon la seconde loi de conversion.

Selon une caractéristique particulière de l'invention, dans le cas où la distance mesurée de l'obstacle le plus proche est supérieure audit seuil de sécurité, le module de régulation détermine, selon la première loi de conversion en fonction de la distance mesurée de l'utilisateur le plus proche, une température moyenne à atteindre par le moyen de chauffage et :

si la température moyenne à atteindre déterminée est supérieure à la température moyenne calculée du moyen de chauffage, envoie une consigne de puissance d'allumage du moyen de chauffage ;
si la température moyenne à atteindre déterminée est inférieure ou égale à la température moyenne calculée du moyen de chauffage, envoie une consigne de puissance de coupure du moyen de chauffage.

Ainsi, la température moyenne à atteindre est déterminée par le module de régulation, de préférence en temps réel, en fonction de la distance mesurée par le moyen de capteur de distance selon la première loi de conversion.

De plus, la température moyenne à atteindre est atteinte par le moyen de chauffage par allumage/coupure du moyen de chauffage selon le résultat de comparaison entre la température moyenne calculée et la température moyenne à atteindre déterminée.

Ainsi, le confort de l'occupant est amélioré, l'occupant recevant par rayonnement une puissance constante quelle que soit sa distance à l'appareil de chauffage.

Selon une caractéristique particulière de l'invention, la consigne de puissance à émettre de sécurité prédéfinie est une consigne de coupure du moyen de chauffage de l'appareil de chauffage.

Ainsi, si l'occupant ou un objet est trop proche de l'appareil de chauffage, le moyen de chauffage de l'appareil de chauffage est coupé afin d'éviter les risques de brûlure de l'occupant ou de carbonisation de l'objet.

La présente invention a également pour objet un appareil de chauffage comprenant un moyen de chauffage et un module de régulation relié à un moyen de capteur de puissance rayonnée par le moyen de chauffage, le module de régulation étant configuré pour comparer la puissance rayonnée mesurée par le moyen de capteur de puissance rayonnée à une instruction de puissance à émettre puis envoyer une consigne de puissance à émettre au moyen de chauffage de l'appareil de chauffage selon le résultat de comparaison, caractérisé par le fait qu'il comprend en outre un moyen de capteur de distance relié au module de régulation, le moyen de capteur de distance et le module de régulation étant configurés pour mettre en oeuvre le procédé selon la présente invention.

Ainsi, le moyen de capteur de distance permet de mesurer la distance de l'obstacle le plus proche de l'appareil de chauffage, et le module de régulation permet soit de passer l'appareil de chauffage dans un mode de fonctionnement de sécurité si l'obstacle le plus proche est trop près de l'appareil de chauffage, soit de mettre à jour la consigne de puissance à émettre en fonction de la distance mesurée de l'utilisateur le plus proche si l'obstacle le plus proche est assez éloigné de l'appareil de chauffage, ce qui permet d'améliorer le confort de l'occupant et de rendre minimaux les risques pour sa sécurité.

En outre, lorsqu'un objet fixe est disposé entre l'appareil de chauffage et au moins un utilisateur, la mesure de la distance de l'utilisateur le plus proche permet de réguler l'appareil de chauffage en fonction de la distance mesurée de l'utilisateur le plus proche et non en fonction de la distance mesurée de l'objet fixe, ainsi le confort de l'utilisateur est amélioré.

Selon une caractéristique particulière de l'invention, le moyen de chauffage comprend au moins l'un parmi un moyen de chauffage radiatif et un moyen de chauffage convectif.

Dans le cas d'un moyen de chauffage convectif uniquement, le procédé de l'invention s'applique sur la chaleur rayonnée par le moyen de chauffage convectif.

Selon une caractéristique particulière de l'invention, le moyen de chauffage est un moyen de chauffage radiatif constitué par une façade chauffante, de préférence métallique.

Selon une caractéristique particulière de l'invention, le moyen de capteur de distance est un ou plusieurs parmi un capteur de distance infrarouge, un capteur de distance à ultrasons, un capteur de distance à balayage laser et un capteur de distance à hyperfréquence.

Ainsi, chacun de ces capteurs est apte à mesurer la distance de l'obstacle le plus proche de l'appareil de chauffage et le cas échéant la distance de l'utilisateur le plus proche de l'appareil de chauffage.

En outre, chacun de ces capteurs est également apte à réaliser un balayage vertical de la pièce dans laquelle l'appareil de chauffage est installé afin de réaliser des mesures de distance à position angulaire constante.

Selon une caractéristique particulière de l'invention, le module de régulation est mis en oeuvre de manière numérique par une unité de calcul comprenant de la mémoire ou reliée à de la mémoire.

Ainsi, la mise à jour de la consigne de puissance à émettre peut être soit calculée en temps réel par l'unité de calcul numérique, soit sélectionnée par l'unité de calcul numérique dans une table à consulter stockée dans la mémoire, les première et seconde lois de conversion étant stockées dans la mémoire.

Selon une caractéristique particulière de l'invention, le module de régulation est un régulateur comprenant l'un parmi un processeur, un microprocesseur, un microcontrôleur, un processeur de signaux numériques (DSP), ou un composant logique programmable de type matrice prédiffusée programmable (FPGA) ou composant à application spécifique (ASIC), et de la mémoire.

Il est à noter que le régulateur est de préférence un régulateur de type PID (proportionnel-intégral-dérivé).

Selon une caractéristique particulière de l'invention, le moyen de capteur de distance est intégré à l'appareil de chauffage.

Le moyen de capteur de distance peut être, de préférence, disposé au niveau de la partie inférieure de l'appareil de chauffage radiatif, les appareils de chauffage radiatifs étant généralement installés plus haut que les appareils de chauffage conventionnels.

Selon une caractéristique particulière de l'invention, le moyen de capteur de puissance rayonnée est intégré à l'appareil de chauffage.

Le moyen de capteur de puissance rayonnée est, de préférence, une sonde de température disposée sur le moyen de chauffage de l'appareil de chauffage, une telle sonde de température pouvant par exemple être une thermistance à coefficient de température négatif (CTN), une sonde de platine 100 Ohms (PT100) ou un thermocouple.

Pour mieux illustrer l'objet de la présente invention, on va en décrire ci-après, à titre illustratif et non limitatif, deux modes de réalisation préférés, avec référence aux dessins annexés.

Sur ces dessins :

- la Figure 1 est un schéma de principe d'un appareil de chauffage à rayonnement thermique selon la présente invention ;
- la Figure 2 est un diagramme de flux d'un procédé de régulation de l'appareil de chauffage à rayonnement thermique en fonction de sa distance à un obstacle ;
- la Figure 3 est un diagramme de flux de l'étape de poursuite de traitement du procédé de régulation de la Figure 2 selon un premier mode de réalisation de l'invention ; et
- la Figure 4 est un diagramme de flux de l'étape de poursuite de traitement du procédé de régulation de la Figure 2 selon un deuxième mode de réalisation de l'invention.

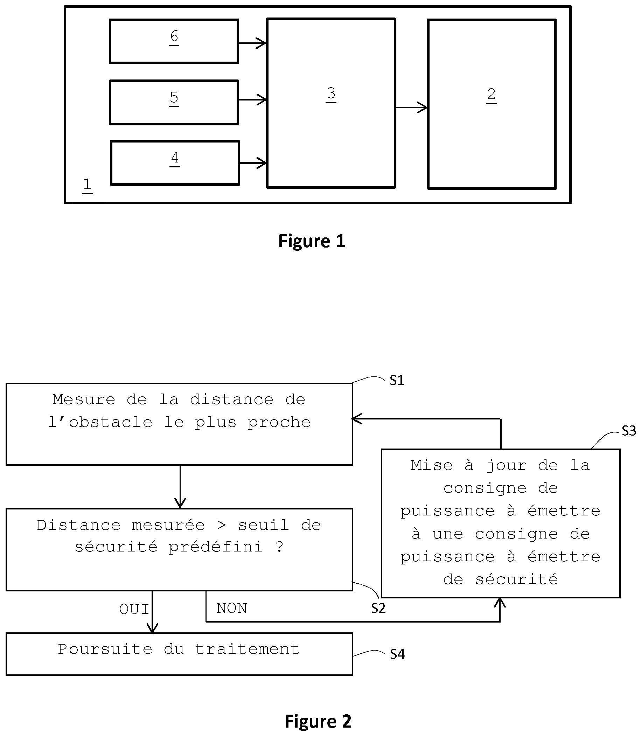

Si l'on se réfère à la Figure 1, on peut voir qu'il y est représenté un appareil de chauffage 1 à rayonnement thermique selon la présente invention.

Bien que le mode de réalisation décrit soit en liaison avec un appareil de chauffage radiatif, l'invention n'est pas limitée à cet égard et s'applique également à un appareil de chauffage convectif, l'invention trouvant alors à s'appliquer sur la partie rayonnée par l'appareil de chauffage convectif.

L'appareil de chauffage 1 comprend un moyen de chauffage 2, un module de régulation 3 et un moyen 4 de capteur de puissance rayonnée par le moyen de chauffage 2.

Le moyen de chauffage 2 peut être un corps de chauffe ou une façade chauffante, de préférence métallique.

Le module de régulation 3 est mis en oeuvre de manière numérique par une unité de calcul comprenant de la mémoire ou reliée à de la mémoire.

Le module de régulation 3 est, de préférence, un régulateur comprenant l'un parmi un processeur, un microprocesseur, un microcontrôleur, un processeur de signaux numériques (DSP), ou un composant logique programmable de type matrice prédiffusée programmable (FPGA) ou composant à application spécifique (ASIC), et de la mémoire, de préférence un régulateur de type PID (proportionnel-intégral-dérivé).

Le module de régulation 3 est configuré pour comparer la puissance rayonnée mesurée par le moyen de capteur de puissance rayonnée 4 à une instruction de puissance à émettre puis envoyer une consigne de puissance à émettre au moyen de chauffage 2 de l'appareil de chauffage 1 selon le résultat de comparaison.

L'appareil de chauffage 1 comprend en outre un moyen de capteur de distance 5.

L'appareil de chauffage 1 comprend également une interface utilisateur 6 permettant à un utilisateur d'entrer une instruction de puissance à émettre sur l'appareil de chauffage 1, l'instruction de puissance à émettre correspondant à la puissance que souhaite ressentir l'utilisateur quelle que soit la distance à l'appareil de chauffage 1.

Il est à noter que l'appareil de chauffage 1 pourrait ne pas comprendre d'interface utilisateur 6, l'instruction de puissance à émettre étant alors soit prédéfinie soit réglée par un module de pilotage centralisé, sans s'écarter du cadre de la présente invention.

Le module de régulation 3 et le moyen de capteur de distance 5 sont configurés pour mettre en oeuvre un procédé de régulation de l'appareil de chauffage 1 en fonction de sa distance à un obstacle, ledit procédé de régulation étant décrit plus en détail en relation avec la Figure 2.

Le moyen de capteur de distance 5 est, dans un mode de réalisation particulier préféré, un capteur de distance à ultrasons.

Il est à noter que le moyen de capteur de distance 5 pourrait également être un ou plusieurs parmi un capteur de distance infrarouge, un capteur de distance à ultrasons, un capteur de distance à balayage laser et un capteur de distance à hyperfréquence, sans s'écarter du cadre de la présente invention.

Le moyen de capteur de puissance rayonnée 4 est de préférence une sonde de température qui est intégrée à l'appareil de chauffage 1, la sonde de température étant disposée sur le moyen de chauffage 2 de l'appareil de chauffage 1.

Le moyen de capteur de distance 5 est intégré à l'appareil de chauffage 1, mais pourrait également être à proximité de l'appareil de chauffage 1, sans s'écarter du cadre de la présente invention.

Le moyen de capteur de distance 5 est, de préférence, disposé au niveau de la partie inférieure de l'appareil de chauffage 1, les appareils de chauffage radiatifs étant généralement installés plus haut que les appareils de chauffage conventionnels.

Si l'on se réfère à la Figure 2, on peut voir qu'il y est représenté le procédé de régulation de l'appareil de chauffage 1 en fonction de sa distance à un obstacle.

Le procédé de régulation de l'appareil de chauffage 1 à rayonnement thermique en fonction de sa distance à un obstacle comprend les étapes suivantes :

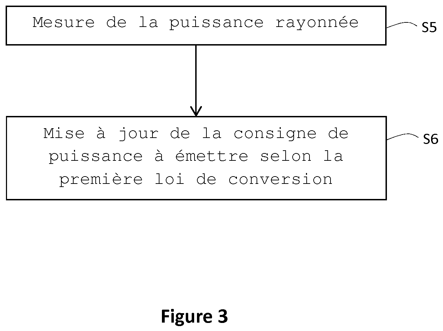

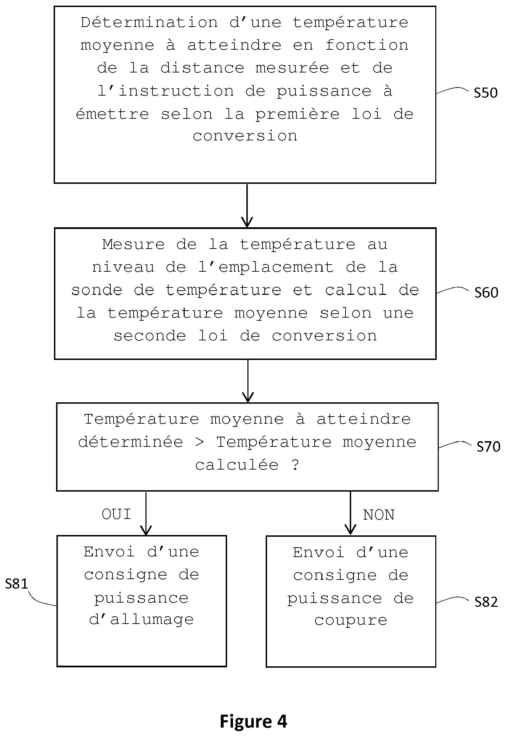

- la mesure S1, par le moyen de capteur de distance 5, de la distance de l'obstacle le plus proche de l'appareil de chauffage 1 ;
- la comparaison S2, par le module de régulation 3, de la distance mesurée de l'obstacle le plus proche à un seuil de sécurité prédéfini, puis :
- si la distance mesurée de l'obstacle le plus proche est inférieure ou égale audit seuil de sécurité, la mise à jour S3 par le module de régulation 3 de la consigne de puissance à émettre à une consigne de puissance à émettre de sécurité prédéfinie, et
- si la distance mesurée de l'obstacle le plus proche est supérieure audit seuil de sécurité, la poursuite du traitement S4 (cette étape étant décrite plus en détail aux Figures 3 et 4).

Il est à noter que le procédé de régulation comprend en outre une étape préalable de détection, par le moyen de capteur de distance 5, de tous les obstacles présents dans le champ de détection du moyen de capteur de distance 5, cette étape préalable étant réalisée avant les étapes décrites ci-dessus.

La consigne de puissance à émettre de sécurité prédéfinie peut, par exemple, correspondre à l'envoi d'une consigne de coupure d'alimentation au moyen de chauffage 2 de l'appareil de chauffage 1, ou le passage à une consigne de puissance minimale prédéfinie.

Ainsi, l'appareil de chauffage 1 peut passer dans un mode de fonctionnement de sécurité si la distance mesurée de l'obstacle le plus proche est inférieure ou égale au seuil de sécurité, ladite distance mesurée pouvant par exemple être la distance d'un utilisateur en face de l'appareil de chauffage 1 ou bien celle d'un objet tel qu'un meuble ou un rideau, ce qui permet d'éviter les risques de brûlure de l'utilisateur ou de carbonisation de l'objet, réduisant ainsi au minimum les risques pour la sécurité du ou des occupants du logement.

Ce procédé de régulation est, de préférence, réalisé en temps réel, c'est-à-dire en continu, mais pourrait également être réalisé périodiquement, c'est-à-dire de manière discrète, par exemple à intervalles fixes d'une ou plusieurs secondes ou d'une ou plusieurs minutes, sans s'écarter du cadre de la présente invention.

Si l'on se réfère à la Figure 3, on peut voir qu'il y est représenté l'étape de poursuite de traitement S4 du procédé de régulation selon un premier mode de réalisation de l'invention.

L'étape de poursuite de traitement S4 du procédé de régulation selon le premier mode de réalisation comprend les étapes suivantes :

- la détermination du point de savoir si au moins l'un des obstacles détectés est un utilisateur ; et
- si aucun des obstacles détectés n'est un utilisateur, le maintien par le module de régulation de la consigne de puissance à émettre (étape non représentée) ;
- si au moins l'un des obstacles détectés est un utilisateur, la mesure, par le moyen de capteur de distance 5, de la distance de l'utilisateur le plus proche de l'appareil de chauffage 1 ;
- la mesure S5 par le moyen de capteur de puissance rayonnée 4, de la puissance rayonnée par le moyen de chauffage 2 ; et
- la mise à jour, par le module de régulation 3, de la consigne de puissance à émettre au moyen de chauffage 2 de l'appareil de chauffage 1 selon la première loi de conversion dépendante de la distance mesurée de l'utilisateur le plus proche, de l'appareil de chauffage 1.

Cette étape de poursuite de traitement S4 selon le premier mode de réalisation est, de préférence, réalisée en temps réel, mais pourrait également être réalisée périodiquement sans s'écarter du cadre de la présente invention.

La mise à jour de la consigne de puissance à émettre peut être soit calculée en temps réel par l'unité de calcul numérique du module de régulation 3, la première loi de conversion étant stockée dans la mémoire du module de régulation 3, soit sélectionnée par ladite unité de calcul numérique dans une table à consulter stockée dans ladite mémoire.

Ainsi, l'obstacle le plus proche, ou le cas échéant l'utilisateur le plus proche, de l'appareil de chauffage 1 reçoit par rayonnement une puissance constante quelle que soit sa distance à l'appareil de chauffage 1, ce qui permet d'améliorer le confort thermique de l'utilisateur.

De plus, ce procédé permet la mesure directe de la puissance émise par rayonnement par l'appareil de chauffage 1 afin de pouvoir assurer rapidement le confort thermique de l'occupant avec un dispositif de chauffage 1 unique.

Le fait de diminuer la puissance émise lorsque l'occupant s'approche de l'appareil de chauffage 1 ou au contraire de l'augmenter s'il s'en éloigne participe à offrir à l'occupant les meilleurs conditions thermiques possibles dans la pièce où est installé l'appareil de chauffage 1.

De plus, lorsqu'un objet fixe est disposé entre l'appareil de chauffage 1 et au moins un utilisateur, la mesure de la distance de l'utilisateur le plus proche permet de réguler l'appareil de chauffage 1 en fonction de la distance mesurée de l'utilisateur le plus proche et non en fonction de la distance mesurée de l'objet fixe, ce qui permet ainsi d'améliorer le confort de l'utilisateur.

Si l'on se réfère à la Figure 4, on peut voir qu'il y est représenté l'étape de poursuite de traitement S4 du procédé de régulation selon un deuxième mode de réalisation de l'invention.

D'un point de vue pratique, piloter la puissance rayonnée d'un appareil de chauffage radiatif revient à piloter la température moyenne de son moyen de chauffage 2.

Ainsi, dans ce deuxième mode de réalisation, le moyen de capteur de puissance rayonnée 4 est une sonde de température disposée à un emplacement donné sur le moyen de chauffage 2, la température moyenne du moyen de chauffage 2 pouvant être calculée en fonction de la température mesurée par la sonde de température selon une seconde loi de conversion qui dépend entre autres du matériau et des dimensions du moyen de chauffage 2.

L'étape de poursuite de traitement S4 du procédé de régulation selon le deuxième mode de réalisation comprend les étapes suivantes :

- la détermination du point de savoir si au moins l'un des obstacles détectés est un utilisateur ; et
- si aucun des obstacles détectés n'est un utilisateur, le maintien par le module de régulation de la consigne de puissance à émettre (étape non représentée) ;
- si au moins l'un des obstacles détectés est un utilisateur, la mesure, par le moyen de capteur de distance 5, de la distance de l'utilisateur le plus proche de l'appareil de chauffage 1 ;
- la détermination S50, par le module de régulation 3, d'une température moyenne du moyen de chauffage 2 à atteindre en fonction de la distance mesurée de l'utilisateur le plus proche, et de l'instruction de puissance à émettre selon la première loi de conversion ;
- la mesure S60, par la sonde de température, de la température du moyen de chauffage 2 au niveau de l'emplacement de la sonde de température et le calcul, par le module de régulation 3, de la température moyenne du moyen de chauffage 2 selon la seconde loi de conversion ;
- la comparaison S70, par le module de régulation 3, de la température moyenne calculée à la température moyenne à atteindre déterminée, puis :
- si la température moyenne à atteindre déterminée est supérieure à la température moyenne calculée, l'envoi S81, par le module de régulation 3, d'une consigne de puissance d'allumage au moyen de chauffage 2 de l'appareil de chauffage 1, et
- si la température moyenne à atteindre déterminée est inférieure ou égale à la température moyenne calculée, l'envoi S82, par le module de régulation 3, d'une consigne de puissance de coupure au moyen de chauffage 2 de l'appareil de chauffage 1.

Cette étape de poursuite de traitement S4 selon le deuxième mode de réalisation est, de préférence, réalisée en temps réel, mais pourrait également être réalisée périodiquement sans s'écarter du cadre de la présente invention.

La température moyenne à atteindre peut être soit calculée en temps réel par l'unité de calcul numérique du module de régulation 3, la première loi de conversion étant stockée dans la mémoire du module de régulation 3, soit sélectionnée par ladite unité de calcul numérique dans une table à consulter stockée dans ladite mémoire.

La température moyenne du moyen de chauffage 2 peut être soit calculée en temps réel par le module de régulation 3, la seconde loi de conversion étant stockée dans la mémoire du module de régulation 3, soit sélectionnée par le module de régulation 3 dans une table à consulter stockée dans la mémoire du module de régulation 3.

Une première loi de conversion à titre d'exemple, déterminée après des expérimentations sur un prototype, est la suivante :

$$T_{moyenne\ à\ atteindre} = 7{,}594\ [°C/m²]\ x\ d^2 + 14{,}474\ [°C/m]\ x\ d + 29{,}892\ [°C],$$

avec $T_{moyenne\ à\ atteindre}$ la température moyenne à atteindre (en degrés Celsius) et d la distance mesurée par le moyen de capteur de distance (en mètres).

Une seconde loi de conversion à titre d'exemple, déterminée après des expérimentations sur un prototype, est la suivante :

$$T_{moyenne\ calculée} = -10,69\ [°C/V^3]\ x\ U^3\ +\ 55,649\ [°C/V^2]\ x\ U^2\ +\ 110,86\ [°C/V]\ x\ U\ +\ 120,57\ [°C],$$

avec $T_{moyenne}$ calculée la température moyenne calculée (en degrés Celsius) et U la tension fournie par la sonde de température en fonction de la température mesurée (en Volts).

La détermination du point de savoir si au moins l'un des obstacles détectés est un utilisateur, et si tel est le cas, la mesure, par le moyen de capteur de distance 5, de la distance de l'utilisateur le plus proche de l'appareil de chauffage 1 comprend les étapes suivantes :

- le balayage vertical, par le moyen de capteur de distance 5, de la pièce dans laquelle l'appareil de chauffage 1 est installé afin de réaliser des mesures de distance à position angulaire constante ;
- la suppression des mesures de distance correspondant au sol et au plafond de la pièce dans laquelle l'appareil de chauffage 1 est installé ;
- la comparaison de chaque mesure de distance, parmi les mesures de distance restantes, à au moins une mesure de distance correspondante antérieure afin de déterminer les mesures de distance correspondant à au moins un utilisateur en mouvement ; et
- la détermination de la distance de l'utilisateur le plus proche de l'appareil de chauffage 1 selon les mesures de distance correspondant à au moins un utilisateur en mouvement déterminées.

La comparaison entre les mesures de distance à différents instants temporels permet de sélectionner les mesures de distance pertinentes pour la régulation, c'est-à-dire relatives à un utilisateur actuellement ou précédemment en mouvement, en éliminant les mesures de distance qui ne varient pas dans le temps, telles que celles du sol, du plafond et d'objets fixes disposés entre l'appareil de chauffage 1 et l'utilisateur.

Les objets fixes étant généralement posés sur le sol, le balayage vertical de la pièce par le moyen de capteur de distance 5 permet de détecter un utilisateur dont la hauteur est généralement supérieure à celles des objets fixes.

Pour que l'appareil de chauffage 1 puisse différencier le sol et le plafond du reste des mesures de distance, il doit connaître la distance entre le moyen de capteur de distance 5 et le sol ainsi que la distance entre le moyen de capteur de distance 5 et le plafond. Ces distances peuvent être fournies à l'appareil de chauffage 1 manuellement (par exemple, par l'intermédiaire d'une interface homme-machine) lors de l'installation ou encore être mesurées par l'appareil de chauffage 1 lors de son installation dans un cycle spécifique d'ajustement de l'appareil de chauffage 1 à la pièce dans laquelle il vient d'être installé. Ainsi, l'appareil de chauffage 1 est apte à supprimer les mesures de distance correspondant au sol et au plafond parmi toutes les mesures de distance réalisées à position angulaire constante.

A chaque cycle de mesures de distance, l'appareil de chauffage 1 enregistre les mesures de distance réalisées dans une mémoire pour les comparer aux mesures de distance ultérieures dans un cycle suivant. Ainsi, après un certain nombre de cycles, l'appareil de chauffage 1 sera apte à différencier un objet fixe d'un utilisateur en mouvement en comparant les mesures enregistrées d'un certain nombre de cycles, ce qui permet de réguler l'appareil de chauffage 1 au plus proche des besoins de l'utilisateur afin d'améliorer son confort.

## Revendications

**1.** Procédé de régulation d'un appareil de chauffage (1) en fonction de sa distance à un obstacle, l'appareil de chauffage (1) comprenant un moyen de chauffage (2) et un module de régulation (3) relié à un moyen de capteur de puissance rayonnée (4) par le moyen de chauffage (2) et à un moyen de capteur de distance (5), le module de régulation (3) étant configuré pour comparer la puissance rayonnée mesurée par le moyen de capteur de puissance rayonnée (4) à une instruction de puissance à émettre puis envoyer une consigne de puissance à émettre au moyen de chauffage (2) de l'appareil de chauffage (1) selon le résultat de comparaison, **caractérisé par le fait que** le procédé comprend :

- la détection, par le moyen de capteur de distance (5), de tous les obstacles présents dans le champ de détection du moyen de capteur de distance (5) ;

- la mesure (S1), par le moyen de capteur de distance (5), de la distance de l'obstacle le plus proche de l'appareil de chauffage (1);
- la comparaison (S2) de la distance mesurée de l'obstacle le plus proche à un seuil de sécurité prédéfini, puis :
- si la distance mesurée de l'obstacle le plus proche est inférieure ou égale audit seuil de sécurité, la mise à jour (S3) par le module de régulation (3) de la consigne de puissance à émettre à une consigne de puissance à émettre de sécurité prédéfinie, et
- si la distance mesurée de l'obstacle le plus proche est supérieure audit seuil de sécurité :

  - la détermination du point de savoir si au moins l'un des obstacles détectés est un utilisateur ;
  - si aucun des obstacles détectés n'est un utilisateur, le maintien par le module de régulation (3) de la consigne de puissance à émettre ; et
  - si au moins l'un des obstacles détectés est un utilisateur, la mesure, par le moyen de capteur de distance (5), de la distance de l'utilisateur le plus proche de l'appareil de chauffage (1) ; et
  - la mesure (S5) de la puissance rayonnée par le moyen de capteur de puissance rayonnée (4) et la mise à jour (S6) par le module de régulation (3) de la consigne de puissance à émettre en fonction de la puissance rayonnée et de la distance mesurée de l'utilisateur le plus proche, selon une première loi de conversion, de telle sorte que l'utilisateur le plus proche de l'appareil de chauffage (1) reçoit par rayonnement une puissance constante correspondant à l'instruction de puissance à émettre quelle que soit sa distance à l'appareil de chauffage (1).

2. Procédé de régulation selon la revendication 1, **caractérisé par le fait que** la détermination du point de savoir si au moins l'un des obstacles détectés est un utilisateur, et si tel est le cas, la mesure, par le moyen de capteur de distance (5), de la distance de l'utilisateur le plus proche de l'appareil de chauffage (1) comprennent :

   - le balayage vertical, par le moyen de capteur de distance (5), de la pièce dans laquelle l'appareil de chauffage (1) est installé afin de réaliser des mesures de distance à position angulaire constante ;
   - la suppression des mesures de distance correspondant au sol et au plafond de la pièce dans laquelle l'appareil de chauffage (1) est installé ;
   - la comparaison de chaque mesure de distance, parmi les mesures de distance restantes, à au moins une mesure de distance correspondante antérieure à la même position angulaire afin de déterminer les mesures de distance correspondant à au moins un utilisateur en mouvement ; et
   - la détermination de la distance de l'utilisateur le plus proche de l'appareil de chauffage (1) selon les mesures de distance correspondant à au moins un utilisateur en mouvement déterminées.

3. Procédé de régulation selon la revendication 1 ou la revendication 2, **caractérisé par le fait que** le moyen de capteur de puissance rayonnée (4) est une sonde de température disposée sur le moyen de chauffage (2) de l'appareil de chauffage (1), la mesure (S5) de la puissance rayonnée consistant à mesurer (S60) la température du moyen de chauffage (2) au niveau de l'emplacement de la sonde de température, puis à calculer la température moyenne du moyen de chauffage (2) selon une seconde loi de conversion.

4. Procédé de régulation selon la revendication 3, **caractérisé par le fait que**, dans le cas où la distance mesurée de l'obstacle le plus proche est supérieure audit seuil de sécurité, le module de régulation (3) détermine (S50), selon la première loi de conversion en fonction de la distance mesurée de l'utilisateur le plus proche, une température moyenne à atteindre par le moyen de chauffage (2) et :

   si la température moyenne à atteindre déterminée est supérieure à la température moyenne calculée du moyen de chauffage (2), envoie (S81) une consigne de puissance d'allumage du moyen de chauffage (2) ;
   si la température moyenne à atteindre déterminée est inférieure ou égale à la température moyenne calculée du moyen de chauffage (2), envoie (S82) une consigne de puissance de coupure du moyen de chauffage (2).

5. Procédé de régulation selon l'une des revendications 1 à 4, **caractérisé par le fait que** la consigne de puissance à émettre de sécurité prédéfinie est une consigne de coupure du moyen de chauffage (2) de l'appareil de chauffage (1).

6. Appareil de chauffage (1) comprenant un moyen de chauffage (2) et un module de régulation (3) relié à un moyen de capteur de puissance (4) rayonnée par le moyen de chauffage (2), le module de régulation (3) étant configuré pour comparer la puissance rayonnée mesurée par le moyen de capteur de puissance rayonnée (4) à une instruction de puissance à émettre puis envoyer une consigne de puissance à émettre au moyen de chauffage (2) de l'appareil de chauffage (1) selon le résultat de comparaison, **caractérisé par le fait qu'**il comprend en outre un moyen de capteur de distance (5) relié au module de régulation (3), le moyen de capteur de distance (5) et le module de régulation (3) étant configurés pour mettre en oeuvre le procédé selon l'une des revendications à 1 à 5.

**7.** Appareil de chauffage (1) selon la revendication 6, **caractérisé par le fait que** le moyen de chauffage (2) comprend au moins l'un parmi un moyen de chauffage radiatif et un moyen de chauffage convectif.

**8.** Appareil de chauffage (1) selon la revendication 7, **caractérisé par le fait que** le moyen de chauffage (2) est un moyen de chauffage radiatif constitué par une façade chauffante, de préférence métallique.

**9.** Appareil de chauffage (1) selon l'une des revendications 6 à 8, **caractérisé par le fait que** le moyen de capteur de distance (5) est un ou plusieurs parmi un capteur de distance infrarouge, un capteur de distance à ultrasons, un capteur de distance à balayage laser et un capteur de distance à hyperfréquence.

**10.** Appareil de chauffage (1) selon l'une des revendications 6 à 9, **caractérisé par le fait que** le module de régulation (3) est mis en oeuvre de manière numérique par une unité de calcul comprenant de la mémoire ou reliée à de la mémoire.

**11.** Appareil de chauffage (1) selon l'une des revendications 6 à 10, **caractérisé par le fait que** le module de régulation (3) est un régulateur comprenant l'un parmi un processeur, un microprocesseur, un microcontrôleur, un processeur de signaux numériques (DSP), ou un composant logique programmable de type matrice prédiffusée programmable (FPGA) ou composant à application spécifique (ASIC), et de la mémoire.

**12.** Appareil de chauffage (1) selon l'une des revendications 6 à 11, **caractérisé par le fait que** le moyen de capteur de distance (5) est intégré à l'appareil de chauffage (1).

**13.** Appareil de chauffage (1) selon l'une des revendications 6 à 12, **caractérisé par le fait que** le moyen de capteur de puissance rayonnée (4) est intégré à l'appareil de chauffage (1).

**Patentansprüche**

**1.** Verfahren zur Regulierung eines Heizgeräts (1) je nach seinem Abstand zu einem Hindernis, wobei das Heizgerät (1) ein Heizmittel (2) umfasst und einem Regulierungsmodul (3), das mit einem Leistungssensor (4) für die vom Heizmittel (2) ausgestrahlte Leistung, und mit einem Abstandssensor (5) verbunden ist, wobei das Regulierungsmodul (3) konfiguriert ist, um die vom Strahlungsleistungssensor (4) gemessene Strahlungsleistung mit einem Befehl auszugebender Leistung zu vergleichen, dann einen Sollwert auszugebender Leistung an das Heizmittel (2) des Heizgeräts (1) zu senden, je nach dem Ergebnis des Vergleichs, **gekennzeichnet dadurch, dass** das Verfahren folgendes umfasst:

- die Ermittlung, durch den Abstandssensor (5), aller Hindernisse im Ermittlungsfeld des Abstandssensors (5);
- die Messung (S1), durch den Abstandssensor (5), des Abstandes des nächsten Hindernisses von dem Heizgerät (1) ;
- den Vergleich (S2) des gemessenen Abstandes des nächsten Hindernisses mit einer vorherbestimmte Sicherheitsschwelle, dann:
- wenn der gemessene Abstand des nächsten Hindernisses niedriger als oder gleich dem Wert der Sicherheitsschwelle ist, die Aktualisierung (S3), durch das Regulierungsmodul (3), des Sollwerts auszugebender Leistung auf einen Sollwert auszugebender Leistung mit vorherbestimmter Sicherheit, und
- wenn der gemessene Abstand des nächsten Hindernisses höher als die Sicherheitsschwelle ist:

- die Bestimmung der Frage, ob mindestens eines der ermittelten Hindernisse ein Nutzer ist;
- wenn keines der ermittelten Hindernisse ein Nutzer ist, das Beibehalten, durch das Regulierungsmodul (3), des Sollwerts der auszugebenden Leistung; und
- wenn mindestens eines der ermittelten Hindernisse ein Nutzer ist, die Messung, mittels des Abstandssensors (5), des Abstandes des nächsten Nutzers von dem Heizgerät (1) ; und
- die Messung (S5) der Strahlungsleistung durch den Strahlungsleistungssensor (4) und die Aktualisierung (S6), durch das Regulierungsmodul (3), des Sollwerts der auszugebenden Leistung je nach der Strahlungsleistung und dem gemessenen Abstand des nächsten Nutzers, gemäß einem ersten Konvertierungsgesetz, so dass der nächstgelegene Nutzer des Heizgeräts (1) durch Strahlung eine konstante Leistung empfängt, die der Anweisung der auszugebenden Leistung entspricht, welcher auch immer sein Abstand vom Heizgerät (1) ist.

2. Regulierungsverfahren nach Anspruch 1, **gekennzeichnet dadurch, dass** die Bestimmung der Frage, ob mindestens eines der ermittelten Hindernisse ein Nutzer ist, und, falls dies der Fall ist, die Messung, durch den Abstandssensor (5), des Abstandes des nächsten Nutzers von dem Heizgerät (1), folgendes umfassen:

   - die senkrechte Abtastung, durch den Abstandssensor (5), des Zimmers, in dem das Heizgerät (1) installiert wird, zwecks Messungen des Abstands bei konstanter Winkellage;
   - die Eliminierung der Abstandsmessungen entsprechend dem Boden und der Decke des Zimmers, in dem das Heizgerät (1) installiert ist;
   - den Vergleich jeder Abstandsmessung aus den übrigen Abstandsmessungen mit mindestens einer entsprechenden früheren Abstandsmessung mit derselben Winkellage, um die Abstandsmessungen zu bestimmen, die mindestens einem sich bewegenden Nutzer entsprechen; und
   - die Ermittlung des Abstandes des Nutzers, der dem Heizgerät (1) am nächsten ist, gemäß den bestimmten Abstandsmessungen, die mindestens einem sich bewegenden Nutzer entsprechen.

3. Regulierungsverfahren nach Anspruch 1 oder Anspruch 2, **gekennzeichnet dadurch, dass** der Strahlungsleistungssensor (4) eine Temperatursonde ist, die auf dem Heizmittel (2) des Heizgeräts (1) angeordnet ist, wobei die Messung (S5) der Strahlungsleistung darin besteht, die Temperatur des Heizmittels (2) am Standort der Temperatursonde zu messen (S60) und dann die mittlere Temperatur des Heizmittels (2) gemäß einem zweiten Konvertierungsgesetz zu berechnen.

4. Regulierungsverfahren nach Anspruch 3, **gekennzeichnet dadurch, dass**, falls der gemessene Abstand des nächsten Hindernisses höher als die Sicherheitsschwelle ist, das Regulierungsmodul (3) gemäß dem ersten Konvertierungsgesetz je nach dem gemessenen Abstand des nächsten Nutzers eine mittlere Temperatur bestimmt (S50), die vom Heizmittel (2) zu erreichen ist, und:

   wenn die bestimmte mittlere zu erreichende Temperatur höher als die berechnete mittlere Temperatur des Heizmittels (2) ist, schickt (S81) es einen Zündungsleistungssollwert des Heizmittels (2);
   wenn die bestimmte mittlere zu erreichende Temperatur niedriger als oder gleich der berechneten mittleren Temperatur des Heizmittels (2) ist, schickt (S82) es einen Leistungssollwert der Abschaltung des Heizmittels (2).

5. Regulierungsverfahren nach einem der Ansprüche 1 bis 4, **gekennzeichnet dadurch, dass** der Sollwert der auszugebenden Leistung mit vorherbestimmter Sicherheit eine Anweisung zur Abschaltung des Heizmittels (2) des Heizgeräts (1) ist.

6. Heizgerät (1) mit einem Heizmittel (2) und einem Regulierungsmodul (3), das mit einem Leistungssensor (4) für die vom Heizmittel (2) ausgestrahlte Leistung verbunden ist, wobei das Regulierungsmodul (3) konfiguriert ist, um die Strahlungsleistung, die vom Strahlungsleistungssensor gemessen (4) wird, mit einem Befehl der auszugebenden Leistung zu vergleichen, dann einen Sollwert der auszugebenden Leistung an das Heizmittel (2) des Heizgeräts (1) zu senden, je nach dem Ergebnis des Vergleichs, **gekennzeichnet dadurch, dass** es außerdem einen Abstandssensor (5) umfasst, der mit dem Regulierungsmodul verbunden (3) ist, wobei der Abstandssensor (5) und das Regulierungsmodul (3) gestaltet sind, um das Verfahren nach einem der Ansprüche 1 bis 5 in die Praxis umzusetzen.

7. Heizgerät (1) nach Anspruch 6, **gekennzeichnet dadurch, dass** das Heizmittel (2) ein auf Strahlung basierendes Heizmittel und/oder ein konvektives Heizmittel umfasst.

8. Heizgerät (1) nach Anspruch 7, **gekennzeichnet dadurch, dass** das Heizmittel (2) ein auf Strahlung basierendes Heizmittel ist, bestehend aus einer Heiz-Außenwand, vorzugsweise aus Metall.

9. Heizgerät (1) nach einem der Ansprüche 6 bis 8, **gekennzeichnet dadurch, dass** der Abstandssensor (5) einer oder mehrere der folgenden ist: ein Infrarot-Abstandssensor, ein Ultraschall-Abstandssensor, ein Laserscan-Abstandssensor und ein Mikrowellen-Abstandssensor.

10. Heizgerät (1) nach einem der Ansprüche 6 bis 9, **gekennzeichnet dadurch dass** das Regulierungsmodul (3) digital implementiert ist, durch eine Recheneinheit, die Speicherinhalt umfasst oder mit Speicherinhalt verbunden ist.

11. Heizgerät (1) nach einem der Ansprüche 6 bis 10, **gekennzeichnet dadurch, dass** das Regulierungsmodul (3) ein Regler ist, der eines der folgenden umfasst: einen Prozessor, einen Mikroprozessor, einen Mikrocontroller, einen Digitalsignalprozessor (DSP), oder einen programmierbaren Logikbaustein vom Typ feldprogrammierbares Gatterarray (FPGA) oder anwendungsspezifischer Baustein (ASIC), sowie Speicherinhalt.

12. Heizgerät (1) nach einem der Ansprüche 6 bis 11, **gekennzeichnet dadurch, dass** der Abstandssensor (5) in das Heizgerät (1) integriert ist.

13. Heizgerät (1) nach einem der Ansprüche 6 bis 12, **gekennzeichnet dadurch, dass** der Strahlungsleistungssensor (4) in das Heizgerät (1) integriert ist.

**Claims**

1. A method for controlling a heating apparatus (1) according to the distance from it to an obstacle, the heating apparatus (1) comprising heating means (2) and a control module (3) connected to means (4) for detecting the power radiated by the heating means (2) and to a distance detecting means (5), the control module (3) being configured to compare the radiated power measured by the radiated power detecting means (4) to a command of power to-be-emitted, and then to send a to-be-emitted power instruction to the heating means (2) of the heating apparatus (1) according to the comparison result, **characterized in that** the method comprises:

   - detecting, by the distance detecting means (5), all the obstacles present in the detecting field of the distance detecting means (5);
   - measuring (S1), by the distance detecting means (5), the distance from the obstacle closest to the heating apparatus (1) ;
   - comparing (S2) the measured distance from the closest obstacle to a predefined safety threshold, and then:
   - if the measured distance from the closest obstacle is lower than or equal to said safety threshold, updating (S3), by the control module (3), the to-be-emitted power instruction to a predefined safety to-be-emitted power instruction, and
   - if the measured distance from the closest obstacle is greater than said safety threshold:

      - determining whether at least one of the detected obstacles is a user;
      - if none of the detected obstacles is a user, maintaining, by the control module (3), the to-be-emitted power instruction; and
      - if at least one of the detected obstacles is a user, measuring, by the distance detecting means (5), the distance from the user closest to the heating apparatus (1) ; and
      - measuring (S5) the power radiated by the radiated power detecting means (4) and updating (S6), by the control module (3), the to-be-emitted power instruction according to the radiated power and the measured distance from the closest user, according to a first conversion law, such that the user closest to the heating apparatus (1) receives, by radiation, a constant power corresponding to the to-be-emitted power command regardless of the distance thereof from the heating apparatus (1).

2. The control method according to claim 1, **characterized in that** determining whether at least one of the detected obstacles is a user and, if so, measuring, by the distance detecting means (5), the distance from the user closest to the heating apparatus (1) comprise:

   - vertically scanning, by the distance detecting means (5), the room in which the heating apparatus (1) is installed so as to perform distance measurements at a constant angular position;
   - deleting the distance measurements corresponding to the floor and the ceiling of the room in which the heating apparatus (1) is installed;
   - comparing each distance measurement, from the remaining distance measurements, to at least one prior corresponding distance measurement at the same angular position so as to determine the distance measurements corresponding to at least one moving user; and
   - determining the distance from the user closest to the heating apparatus (1) according to the determined distance measurements corresponding to at least one moving user.

3. The control method according to claim 1 or claim 2, **characterized in that** the radiated power detecting means (4) is a temperature probe arranged on the heating means (2) of the heating apparatus (1), the measurement (S5) of the radiated power consisting in measuring (S60) the temperature of the heating means (2) at the location of the temperature probe, and then calculating the average temperature of the heating means (2) according to a second conversion law.

4. The control method according to claim 3, **characterized in that**, in the case where the measured distance from the closest obstacle is greater than said safety threshold, the control module (3) determines (S50), according to the first conversion law and the measured distance from the closest user, an average temperature to be reached by the heating means (2); and
if the determined to-be-reached average temperature is greater than the calculated average temperature of the heating means (2), sends (S81) a power instruction for turning on the heating means (2);
if the determined to-be-reached average temperature is lower than or equal to the calculated average temperature of the heating means (2), sends (S82) a power instruction for turning off the heating means (2).

5. The control method according to one of claims 1-4, **characterized in that** the predefined safety to-be-emitted power instruction is an instruction for turning off the heating means (2) of the heating apparatus (1).

6. A heating apparatus (1) comprising heating means (2) and a control module (3) connected to means (4) for detecting the power radiated by the heating means (2), the control module (3) being configured to compare the radiated power measured by the radiated power detecting means (4) to a to-be-emitted power command, and then to send a to-be-emitted power instruction to the heating means (2) of the heating apparatus (1) according to the comparison result, **characterized in that** it further comprises distance detecting means (5) connected to the control module (3), the distance detecting means (5) and the control module (3) being configured to implement the method according to one of claims 1-5.

7. The heating apparatus (1) according to claim 6, **characterized in that** the heating means (2) comprises at least one of radiative heating means and convective heating means.

8. The heating apparatus (1) according to claim 7, **characterized in that** the heating means (2) is radiative heating means comprising a heating face, preferably made of metal.

9. The heating apparatus (1) according to one of claims 6-8, **characterized in that** the distance detecting means (5) is one or more of an infrared distance sensor, an ultrasound distance sensor, a laser scanning distance sensor and a microwave distance sensor.

10. The heating apparatus (1) according to one of claims 6-9, **characterized in that** the control module (3) is digitally implemented by a computing unit comprising memory or connected to memory.

11. The heating apparatus (1) according to one of claims 6-10, **characterized in that** the control module (3) is a controller comprising one of a processor, a microprocessor, a microcontroller, a digital signal processor (DSP), or a programmable logic component of the type field programmable gate array (FPGA) or application-specific (ASIC) component, and memory.

12. The heating apparatus (1) according to one of claims 6-11, **characterized in that** the distance detecting means (5) is integrated with the heating apparatus (1).

13. The heating apparatus (1) according to one of claims 6-12, **characterized in that** the radiated power detecting means (4) is integrated with the heating apparatus (1).

**Figure 1**

Mesure de la distance de l'obstacle le plus proche — S1

Distance mesurée > seuil de sécurité prédéfini ?   S2

OUI   NON

Mise à jour de la consigne de puissance à émettre à une consigne de puissance à émettre de sécurité — S3

Poursuite du traitement — S4

**Figure 2**

Mesure de la puissance rayonnée — S5

Mise à jour de la consigne de puissance à émettre selon la première loi de conversion — S6

**Figure 3**

Détermination d'une température moyenne à atteindre en fonction de la distance mesurée et de l'instruction de puissance à émettre selon la première loi de conversion — S50

Mesure de la température au niveau de l'emplacement de la sonde de température et calcul de la température moyenne selon une seconde loi de conversion — S60

Température moyenne à atteindre déterminée > Température moyenne calculée ? — S70

OUI

NON

S81 — Envoi d'une consigne de puissance d'allumage

Envoi d'une consigne de puissance de coupure — S82

**Figure 4**

## RÉFÉRENCES CITÉES DANS LA DESCRIPTION

**Documents brevets cités dans la description**

- EP 0264355 A1
- EP 0785493 A1
- EP 2104016 A1
- US 5798503 A